# NEW EUROPEAN PATENT SPECIFICATION

(11) **EP 0 245 216 B2**
(45) Date of publication and mention of the opposition decision: **10.11.1993**
(45) Mention of the grant of the patent: 21.03.1990
(21) Application number: 87830138.1
(22) Date of filing: 10.04.1987
(51) Int. Cl.: B60K 20/00, F16H 61/18

(54) **Motor-driven control device for motor vehicle gearboxes**
Steuervorrichtung mit Motorantrieb für Kraftfahrzeuggetriebe
Dispositif de commande à moteur pour boîtes de vitesses de véhicules à moteur

(30) Priority: 23.04.1986 IT 6733886
(43) Date of publication of application: 11.11.1987
(73) Proprietor: FIAT AUTO S.p.A., 10135 Torino (IT)
(72) Inventor: Falzoni, Gianluigi, I-10141 Torino (IT)
(74) Representative: Bosotti, Luciano

(56) References cited:
- EP-A- 0 046 845
- EP-A- 0 107 761
- EP-A- 0 108 209
- DE-A- 3 505 850
- FR-A- 1 006 379
- FR-A- 1 179 639
- FR-A- 1 304 688
- FR-A- 2 349 071
- GB-A- 2 129 509
- GB-A- 2 129 510
- Zeitschrift "lastauto omnibus", 5/1984, page 30(1)

## Description

The present invention refers to a control device for motor vehicle gearboxes as specified in the preamble of claim 1.

Such a control device is known from the periodical Zeitschrift "lastanto omnibus", 5/1984, page 30(1).

The object of the present invention is to provide a control device for gearboxes of the type defined above, in which the operation of the selection rod and the engagement rod are servo-assisted, in order, on the one hand, to make it easier and more convenient to engage the gear ratios and, on the other hand, to prevent erroneous engagements which could prejudice the efficiency of the gearbox.

To this end, a control device in accordance with the present invention is characterised by the features specified in the characterising part of claim 1.

The device according to the invention can be applied to advantage to existing gearboxes in a particularly simple and easy manner without mechanical adaptations.

According to the invention, the detector means comprise means for sensing the condition of engagement or disengagement of the friction clutch associated with the gearbox, means for sensing the position of the accelerator pedal of the vehicle in which the gearbox is to be installed, means for sensing the speed of the vehicle, means for sensing the input and output speeds of the gearbox, and means for indicating the gear ratio engaged or the neutral condition of the gearbox.

The device according to the invention includes locking means actuatable by the electronic processing unit, in response to operating conditions detected by the detector means with which the selected gear ratio is incompatible, to prevent the activation of the setting means corresponding to the engagement of this selected gear ratio.

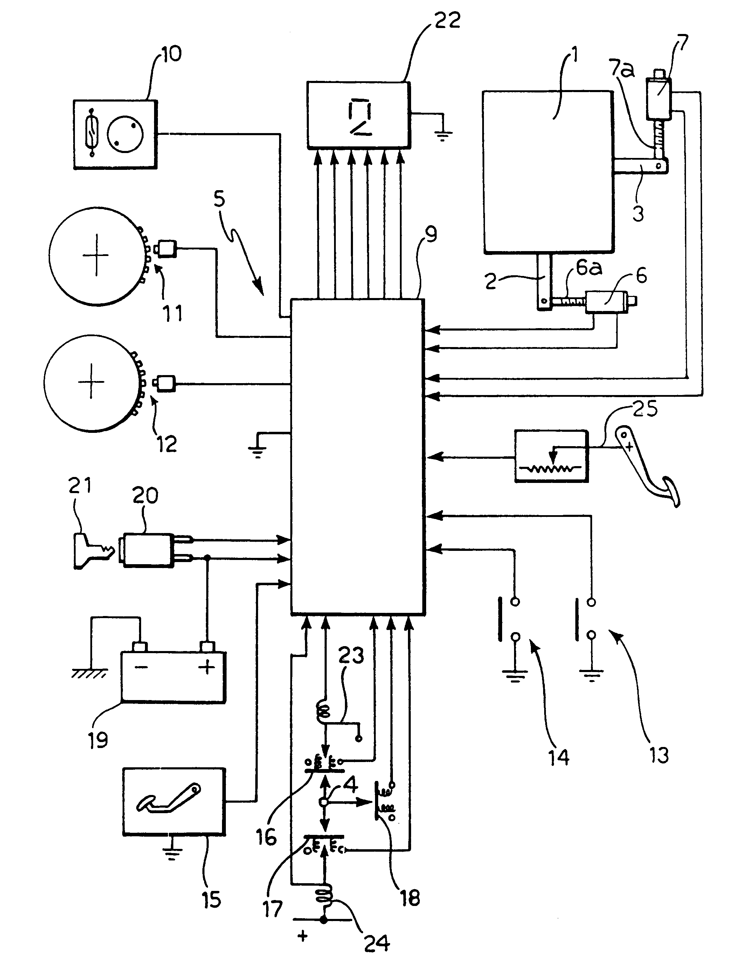

The invention will now be described in detail with reference to the appended drawing, provided purely by way of non-limiting example, which illustrates diagrammatically a motor vehicle gearbox having a control device according to the invention.

With reference to the drawing, a motor vehicle gearbox of conventional type, for example with constantly-meshed gears and five gear ratios is generally indicated 1.

The gearbox 1 also has, in known manner, two external levers 2, 3 the operation of which respectively enable the selection of the gear ratio (first ratio/sec- ond ratio, third ratio/fourth ratio or fifth ratio/reverse) and the engagement of the selected ratios (first ratio or second ratio, third ratio or fourth ratio, fifth ratio or reverse).

The operation of the selection lever and the engagement lever 3 is achieved by a manually-operated gear lever, indicated schematically in plan at 4 in the drawing, through a control device, generally indicated 5.

The control device 5 includes two d.c. electric motors 6, 7 of the screw-and-nut type with recirculating balls. The screws of the two electric motors 6, 7, indicated 6a, 7a respectively, are connected to the selection lever 2 and to the engagement lever 3 respectively, so as to effect their selection and engagement movements.

The actuation of the motors 6, 7 is controlled through an electronic microprocessor unit 9 in response to the movement of the gear lever 4. This actuation is subordinate to the compatibility of the gear ratio selected by the lever 4 to the operating conditions correlated directly and indirectly with the selection and engagement of the gear ratios and transmitted in the form of electrical signals to the processing unit 9.

For this purpose, two groups of sensors are provided, one of motion and one of state respectively. The motion sensors comprise, for example, a reed relay 10 arranged to monitor the speed of the output shaft of the gearbox or the speed of rotation of the wheels of the vehicle in which the gearbox is installed; two phonic-wheel transducers and electromagnetic pick-ups 11, 12 for monitoring the speed of the in put shaft of the gearbox and the speed of the veh i-cle; a potentiometer 25 for detecting the position of the accelerator pedal of the vehicle.

The state sensors comprise two switches 13 and 14, which are normally controlled by the selection lever 2 and the engagement lever 3 respectively, arranged to signal to the processing unit 9 the gear ratio effectively selected and engaged or the neutral condition of the gearbox.

The state sensors also include a furtherswitch 15 for indicating to the processing unit 9 the condition of engagement or disengagement of the friction clutch associated with the input to the gearbox.

The gear lever 4 is constituted, in the embodiment illustrated, by a simple knob movable forwardly or rearwardly (upwards and downwards respectively in the drawing) to impose the movement from one gear ratio to a higher gear ratio or to a lower gear ratio, respectively. A sideways movement of the lever4, for example towards the right in the drawing, achieves the neutral condition.

In order to set a gear ratio or neutral, there are provided two switches 16 and 17 which are unstable in their closed positions and are arranged to provide the unit 9 with electrical signals corresponding respectively to the setting of a higher ratio and the setting of a lower ratio, and a third switch 18, which is unstable in a closed position, for indicating to the unit 9 the setting of the neutral condition.

The switches 16 and 17 are connected to two electromagnetic locking devices 23, 24 for preventing their closure as a result of a corresponding movement of the lever 4 or for preventing this movement of the lever 4 as a result of a locking signal from the processing unit 9, in the manner clarified below.

The processing unit 9 is connected to an electrical supply 19 of the vehicle through a conventional ignition switch 20 operable in known manner by means of a key 21. The unit 9 is also connected to a digital visual display 22 for indicating visually the gear ratio engaged or the idle condition of the gearbox, as well as any auxiliary indications described below.

In operation, after the control device 5 has been actuated by means of the switch 20, the driver sets the desired gear ratio by operating the gear lever 4, as described above. The electrical signals indicative of the operating conditions correlated with the selection and engagement of the gear ratios, which come from the sensors 10, 11, 12, 13, 14 and 25, enable the processing unit 9 to establish whether the engagement of the gear ratio set is allowable or must be prevented. In the first case, the closure of the switch 16 or the switch 17 by the lever 4 causes a corresponding actuation of the motors 6 and 7, and hence a corresponding movement of the respective selection lever2 and engagement lever 3, so as to locate the gears in the gearbox in the condition corresponding to the gear ratio set. In the opposite case, the unit 9 causes the operation of one or other of the electromagnetic locking devices 23, 24 so as to prevent the engagement of the gear ratio set. This may occur, for example, when the switch 15 indicates the disengagement of the friction clutch, when the conditions detected by the motion sensors 10, 11 and 12 are incompatible with the gear ratio set, or even when the sensor 25 detects a further condition of incompatibility. Thus, erroneous operations of the lever 4 by the driver, which could lead to dangerous malfunctions of the engine and the gearbox, are avoided.

At the end of each gear-change sequence, the unit 9 supplies the visual display 22 with signals corresponding to the indication of the gear ratio engaged.

The processing unit 9 may be arranged to carry out a procedure of signalling the impossibility of engagement of the gear ratios while the vehicle is stationary, whenever baulking of the gears of the gearbox occurs. Thus, during attempts at engagement of the gear ratio followed by baulking of the gears, the visual display 22 may be activated to advise the driver of the situation visually.

Moreover, the unit 9 could conceivably provide, by means of the same visual display 22, an intelligent indication of the most convenient gear ratio to be engaged, for example, in terms of fuel consumption or improved power from the engine, by processing the data from the sensors 10,11, 12, 13 and 25.

Naturally, the principle of the invention remaining the same, the constructional details and forms of embodiment may be varied widely with respect to that described and illustrated without thereby departing from the scope of the present invention.

## Claims

1. Control device for motor vehicle gearboxes (1) including a manually-operated gear lever (4), a rod (2) for selecting the gear ratios, a rod (3) for engaging the gear ratios, and means for operating the selection rod and the engagement rod in response to the movement of the gear lever, wherein the operating means (5) include:
- two servomotors (6, 7) arranged to effect the movement of the rods (2,3) corresponding respectively to the selection and engagement of the gear ratios,
- detector means (10, 11, 12, 13, 14, 15, 25) for detecting operating conditions correlated directly or indirectly with the selection and engagement of the gear ratios and arranged to generate electrical signals indicative of these operating conditions, and
- an electronic processing unit (9) supplied with the electrical signals from the detector means (10, 11, 12, 13, 14, 15, 25), characterised in that the electronic processing unit (9) is arranged to effect, upon manipulation of the gear lever (4), the operation of the servomotors (6, 7) corresponding to the engagement of the set gear ratio only when the operating conditions detected by the detector means are compatible with the set gear ratio, in that the two servomotors are electric motors (6, 7), and in that it comprises two normally-open electric switches (16, 17) arranged to be selectively closable upon movement of the gear lever (4) corresponding to shift up or shift down of the gear ratios, respectively; the closure of each of said two switches (16,17) generating an input electrical signal to the electronic unit (9) corresponding to the gear ratio set by the movement of the gear lever (4) whereby the said electric motors (16, 17) are to be correspondingly actuated, and electrical locking means (23, 24) connected to each of said two switches (16,17) and actuatable by the electronic processing unit (9), in response to operating conditions detected by the detector means (10, 11, 12, 13, 14, 15, 25) with which a set gear ratio is incompatible, to prevent closure of said switches (16, 17).

2. Device according to Claim 1, in which the input to the gearbox is to be associated with a friction clutch, characterised in that the detector means comprise sensor means (15) for sensing the condition of engagement or disengagement of the friction clutch, means (11) for sensing the speed of the vehicle in which the gearbox is to be installed, means (10, 11) for sensing the input and output of the gearbox, means (25) for sensing the position of the accelerator pedal of the vehicle, and means (13, 14) for indicating the gear ratio engaged or the idle condition of the gearbox.

3. Device according to Claim 1, characterised in that the locking means are constituted by electromagnetically-controlled stops (23, 24).

4. Device according to any one of the preceding claims, characterised in that it further includes a digital visual display (22) connected to the processing unit (9) to indicate the gear ratio or idle condition of the gearbox, the visual display (22) having warning means for signalling any impossibility of engagement of the selected gear ratio because of baulking of the gears of the gearbox.

## Patentansprüche

1. Steuervorrichtung für Kraftfahrzeuggetriebe (1) umfassend einen manuell betätigten Schalthebel (4), eine Stange (2) zum Wählen der Getriebeübersetzungen, eine Stange (3) zum Schalten der Getriebeübersetzungen und Mittel zur Betätigung der Wählstange und der Schaltstange in Reaktion auf die Bewegung des Schalthebels, wobei die Betätigungsmittel (5) umfassen:
- zwei Stellmotoren (6, 7), die dazu eingerichtet sind, die Bewegung der Stangen (2, 3) entsprechend der Wahl bzw. der Schaltung der Getriebeübersetzungen zu bewirken,
- Detektormittel (10, 11, 12, 13, 14, 15, 25), die zur Erfassung von direkt oder indirekt mit der Wahl und der Schaltung der Getriebeübersetzungen korrelierten Betriebsbedingungen vorgesehen und dazu eingerichtet sind, elektrische Signale zu erzeugen, die für diese Betriebsbedingungen kennzeichnend sind, und
- eine elektronische Verarbeitungseinheit (9), der die elektrischen Signale der Detektormittel (10, 11, 12, 13, 14, 15, 25) zugeführt werden,
dadurch gekennzeichnet,
daß die elektronische Verarbeitungseinheit (9) dazu eingerichtet ist, auf Bedienung des Schalthebels (4) hin den Betrieb der Stellmotoren (6, 7) entsprechend der Schaltung der eingestellten Getriebeübersetzung nur dann zu bewirken, wenn die von den Detektormitteln erfaßten Betriebsbedingungen mit der eingestellten Getriebeübersetzung kompatibel sind, daß die beiden Stellmotoren Elektromotoren (6, 7) sind, daß sie zwei normalerweise geöffnete elektrische Schalter (16, 17) umfaßt, die dazu eingerichtet sind, auf die Bewegung des Schalthebels (4) entsprechend dem Heraufschalten bzw. Herunterschalten der Getriebeübersetzungen hin selektiv schließbar zu sein, wobei das Schließen von jedem der beiden Schalter (16, 17) ein elektrisches Eingangssignal fürdie elektronische Einheit (9) entsprechend der durch die Bewegung des Schalthebels (4) eingestellten Getriebeübersetzung erzeugt, wodurch die Elektromotoren (16,17) entsprechend in Betrieb zu bringen sind, und
daß sie elektrische Sperrmittel (23, 24) umfaßt, die mit jedem der beiden Schalter (16, 17) verbunden und mittels der elektronischen Verarbeitungseinheit (9) als Reaktion auf von den Detektormitteln (10,11,12,13,14,15,25) erfaßten Betriebsbedingungen, mit denen eine eingestellte Getriebeübersetzung nicht kompatibel ist, betatigbar sind, um das Schließen der Schalter (16, 17) zu verhindern.

2. Vorrichtung nach Anspruch 1, bei der der Getriebeeingang mit einer Reibungskupplung zu verbinden ist, dadurch gekennzeichnet, daß die Detektormittel Sensormittel (15) zur Erfassung der Betriebsbedingung des Eingerücktseins oder Ausgerücktseins der Reibungskupplung, Mittel (11) zur Erfassung der Geschwindigkeit des Fahrzeugs, in dem das Getriebe zu installieren ist, Mittel (10, 11) zur Erfassung der Eingangs-und Ausgangsgeschwindigkeit des Getriebes, Mittel (25) zur Erfassung der Position des Beschleunigerpedals des Fahrzeugs und Mittel (13, 14) zur Anzeige der geschalteten Getriebeübersetzung oder des Leerlaufzustands des Getriebes umfassen.

3. Vorrichtung nach Anspruch 1, dadurch gekennzeichnet, daß die Sperrmittel von elektromagnetisch gesteuerten Anschlägen (23, 24) gebildet sind.

4. Vorrichtung nach einem der vorhergehenden Ansprüche, dadurch gekennzeichnet, daß sie ferner eine digitale Sichtanzeige (22) aufweist, die mit der Verarbeitungseinheit (9) verbunden ist, um die Getriebeübersetzung oder den Leerlaufzustand des Getriebes anzuzeigen, wobei die Sichtanzeige (22) Warnmittel aufweist, die jede Unmöglichkeit des Schaltens der gewählten Getriebeübersetzung wegen Sperrens der Zahnräder des Getriebes signalisieren.

## Revendications

1. Dispositif de commande pour boîtes de vitesses (1) de véhicules motorisés, comportant un levier (4) de vitesses manoeuvré manuellement, une tringle (2) pour sélectionner les vitesses, une tringle (3) pour faire passer les vitesses et des moyens pour manoeuvrer la tringle de sélection des vitesses et la tringle de passage des vitesses en réponse au mouvement du levier des vitesses, dans lequel les moyens de manoeuvre (5) comportent:
- deux servomoteurs (6, 7) disposés pourfai- re effectuer leurs mouvements aux tiges (2, 3) correspondant respectivement à la sélection des vitesses et au passage des vitesses,
- des moyens de détection (10,11, 12, 13,14, 15, 25) conçus pour détecter les conditions opératoires en relation directe ou indirecte avec la sélection et le passage des vitesses et pour générer des signaux électriques indicatifs de ces conditions opératoires, et
- une unité de traitement électronique (9) alimentée avec les signaux électriques provenant des moyens de détection (10, 11, 12, 13, 14, 15, 25),
caractérisé en ce que l'unité de traitement électronique (9) est conçue, lors de la manipulation du levier de vitesses (4), pour ne faire effectuer aux servomoteurs (6, 7) la manoeuvre correspondant au passage de la vitesse sélectionnée que si les conditions opératoires détectées par les moyens de détection sont compatibles avec la vitesse sélectionnée, en ce que les deux servomoteurs sont des moteurs électriques (6, 7) et en ce qu'il comprend deux contacteurs électriques (16, 17) normalement ouverts conçus pour pouvoir être formés sélectivement lors d'un mouvement du levier de vitesses (4) correspondant au passage à une vitesse supérieure ou à une vitesse inférieure, respectivement, la fermeture de chacun desdits deux contacteurs (16, 17) produisant un signal électrique d'entrée pour l'unité électronique (9) correspondant à la vitesse prescrite par le mouvement du levier de vitesses (4) de sorte que lesdits moteurs électriques (6, 7) doivent être actionnés de manière correspondante, et des dispositifs électriques de verrouillage (23, 24) reliés à chacun desdits deux contacteurs (16, 17) et qui peuvent être actionnés par l'unité de traitement électronique (9), en réponse à des conditions opératoires détectées par les moyens de détection (10, 11, 12, 13, 14, 15, 25) avec lesquelles une vitesse prescrite est incompatible, pour empêcher la fermeture desdits contacteurs (16,17).

2. Dispositif selon la revendication 1, dans lequel le signal d'entrée dans la boîte de vitesses doit être associé avec un embrayage, caractérisé en ce que les moyens de détection comportent des moyens de détection (15) pour détecter si l'embrayage est embrayé ou débrayé, des moyens (11) pour détecter la vitesse du véhicule sur lequel la boîte de vitesses doit être installée, des moyens (10, 11) pour détecter la vitesse de rotation à l'entrée et à la sortie de la boîte de vitesses, des moyens (25) pour détecter la position de la pédale d'accélérateur du véhicule, et des moyens (13,14) pour indiquer la vitesse qui est passée ou pour indiquer que la boîte de vitesses est au point mort.

3. Dispositif selon la revendication 1, caractérisé en ce que les moyens de verrouillage sont constitués par des butées (23, 24) à commande électromagnétique.

4. Dispositif selon l'une quelconque des revendications précédentes, caractérisé en ce qu'il comporte en outre un visuel numérique (22) relié à l'unité de traitement (9) pour indiquer la vitesse engagée ou le fait que la boîte soit au point mort, le visuel (22) comprenant des moyens d'avertissement pour signaler toute impossibilité de passer la vitesse sélectionnée par suite du refus des pignons de la boite.
